# EUROPÄISCHE PATENTSCHRIFT

(11) **EP 1 336 738 B1**
(45) Veröffentlichungstag und Bekanntmachung des Hinweises auf die Patenterteilung: **13.12.2006**
(21) Anmeldenummer: 03000716.5
(22) Anmeldetag: 13.01.2003
(51) Int. Cl.: F02B 43/10, F02M 21/02

(54) **Einrichtung zum Einbringen von Kraftstoff zur Verbrennung in einer Brennkraftmaschine**
Device for introducing fuel in an internal combustion engine
Dispositif pour l'introduction de combustible dans un moteur à combustion interne

(30) Priorität: 14.02.2002 DE 10206034
(43) Veröffentlichungstag der Anmeldung: 20.08.2003
(73) Patentinhaber: Bayerische Motoren Werke Aktiengesellschaft, 80809 München (DE)
(72) Erfinder: Fickel, Hans, 85368 Moosburg (DE); Kasperowski, Stefan, Dr., 94437 Mamming (DE); Wetzel, Franz-Josef, 82216 Gernlinden (DE); Hallmannsegger, Michael, 81479 München (DE)

(56) Entgegenhaltungen:
- EP-B- 1 047 896
- GB-A- 2 124 298
- US-A- 4 411 223
- US-A- 5 183 011
- US-A- 5 305 714
- US-A- 5 799 624
- US-A1- 2001 049 043

## Beschreibung

Die Erfindung betrifft eine Einrichtung zum intermittierenden Einbringen von Kraftstoff, insbesondere von gasförmigem Wasserstoff, zur Verbrennung in einer Brennkraftmaschine.

In bezug auf die Zumessung von Kraftstoff zur Verbrennung in einer Brennkraftmaschine sind bisher eine Vielzahl von Lösungen bekannt geworden, welche im wesentlichen auf den Grundformen von Armaturen zum Stellen und Schalten von Fluidströmen basieren. Zu nennen sind in diesem Zusammenhang Ventile bei denen sich ein Abschlusskörper geradlinig oder längs zur Strömungsrichtung bewegt, Schieber, welche einen sich gradlinig quer zur Strömung bewegenden Abschlusskörper umfassen, Hähne; bei denen ein Abschlusskörper drehend um eine Achse quer zur Strömung bewegbar ist und in Offenstellung durchströmt wird sowie Klappen, welche sich dadurch auszeichnen, dass ein scheibenförmiger Abschlusskörper drehend um eine Achse quer zur Strömung bewegbar ist und in Offenstellung umströmt wird.

Beispielhaft für eine Kraftstoffzumessung mittels Hubventil wird die DE 43 08 775 C1 genannt, welche ein Gaseinblasventil zum Einblasen von Wasserstoffgas in den Brennraum einer Brennkraftmaschine beschreibt. Das beschriebene Ventil umfasst einen längsverschiebbaren Kolben und ein mit diesem verbundenes Tellerventil, welches in Kraftstoffströmungsrichtung öffnet.

Als sehr problematisch insbesondere in Bezug auf eine präzise Kraftstoffzumessung hat sich bei derartigen Ventilen die mangelhafte Dynamik herausgestellt. Bei kurzen Ansteuerzeiten steigt der prozentuale Anteil des Öffnungs- und Schließvorganges am Gesamteinspritzvorgang überproportional an, was Nichtlinearitäten und Schwankungen der Einspritzmenge zufolge hat.

Die DE 39 04 480 A1 beschreibt stellvertretend die Einbringung von Kraftstoff in das Saugrohr einer Brennkraftmaschine unter Verwendung eines Drehschiebers, wodurch sich eine kosinusförmige Zumessbewegung ergibt. Mit der beschriebenen Ausführung wird versucht, einen steilen Anstieg bzw. Abfall der eingeblasenen Kraftstoffmenge durch schnelles überfahren der Steuerkanten zu erreichen.

Prinzipiell erfüllt auch die DE 39 04 480 A1 die Anforderungen bezüglich der Kraftstoffzumessung nur sehr unzureichend. Als prinzipbedingte Nachteile des Drehschiebers haben sich dabei insbesondere die unzureichende Dichtheit und die daraus resultierende große und unkontrollierte Leckage in unbetätigtem Zustand herausgestellt. Um aus Gründen der Systemsicherheit eine vollständige Absperrung zu erreichen, sind zusätzlich Absperrventile erforderlich.

Die allgemein bekannte Art der Kraftstoffzumessung mittels Drosselklappe stört selbst in vollständig geöffnetem Zustand den Durchfluss und bedingt so Verluste. Falls die Achse der Klappe nicht exakt mittig angeordnet ist, treten zudem Dichtheitsproblem mit den wie in Bezug auf die DE 39 04 480 A1 geschilderten Nachteilen, ebenso ist die Regelung aufgrund der an den Klappenflügeln angreifenden unterschiedlichen Momente durch die Fluidströmung stark erschwert.

Unabhängig von den dargestellten Problemen weisen alle beschriebenen Systeme zur stufenlosen Kraftstoffzumessung mittels veränderlichen Öffnungsquerschnitten unabhängig von ihrer Bauart Probleme bei der exakten Zuweisung veränderlicher Massenströme auf. Der Massedurchsatz ist unmittelbar abhängig von Druck und Temperatur vor der Dosiereinrichtung sowie von der Stellwegänderung des Absperrkörpers und der damit verbundenen Änderung des Strömungsquerschnittes, so dass eine exakte Zumessung nur mit einem erheblichen (regelungs-)technischen Aufwand erreicht werden kann.

Als weiteres Problem stellten sich beispielsweise bei der Verwendung von magnetischen bzw. piezoelektrischen Aktuatoren die für Proportionalsteller typischen störenden Effekte wie die Hysterese dar.

Aufgabe der Erfindung ist die Bereitstellung einer Einrichtung zum Einbringen von Kraftstoff zur Verbrennung in einer Brennkraftmaschine, welche unter Vermeidung der genannten Nachteile einerseits eine sehr genaue Zumessung des Kraftstoffes insbesondere in Bezug auf den Massenstrom und andererseits eine besonders dynamische Zumessung gestattet.

Zur Lösung der Aufgabe werden gemäß dem Anspruch 1 zwei voneinander getrennte Funktionsbereiche vorgeschlagen, wobei ein erster Funktionsbereich zum Stellen, entsprechend einer Regelung des Kraftstoffmassenstromes und ein zweiter Funktionsbereich zum Schalten, entsprechend einem Öffnen bzw. Sperren des Kraftstoffstromes vorgesehen ist; der zugrundeliegende Gedanke umfasst somit die funktionelle und/oder bauliche Trennung eines Bereiches, mittels welchem eine veränderliche Kraftstoffmenge zumessbar ist einerseits und einem Bereich, mittels welchem der Kraftstoff in definierten Grenzen bezüglich Zeitpunkt, Verlauf und/oder Dauer zuführbar ist andererseits.

Bei dem gasförmigen Kraftstoff handelt es sich insbesondere um Wasserstoff, ebenso kann die erfindungsgemäße Einrichtung jedoch auch mit anderen gasförmigen Kraftstoffen wie beispielsweise LPG oder Erdgas verwendet werden.

Gemäß einem besonders bevorzugten Ausführungsbeispiel der Erfindung umfasst sowohl der erste als auch der zweite Funktionsbereich einen ansteuerbaren Aktuator. Bei einer sehr vorteilhaften Ausgestaltung ist dabei mittels des ersten Funktionsbereiches der durchströmte Querschnitt des Kraftstoffweges kontinuierlich oder diskret variierbar, mittels des zweiten Funktionsbereiches ist der Kraftstoffweg öffen- bzw. schließbar.

Sehr zweckmäßig ist es, wenn der durchströmte Querschnitt des ersten Funktionsbereiches bezüglich einer Stellgröße zumindest bereichsweise eine lineare, progressive und/oder degressive Kennlinie aufweist.

In einem weiteren Ausführungsbeispiel, in welchem der zweite Funktionsbereich eine zwischen zwei Endlagen bewegbare Verschlusseinrichtung umfasst, ist mittels des ersten Funktionsbereiches wenigstens eine Endlage derart verlagerbar, dass eine Veränderung des Bewegungsbereiches der Verschlusseinrichtung erfolgt; eine Veränderung des maximalen Hubes bewirkt somit eine Dosierung des Massenstromes.

Nachfolgend sind Ausführungsbeispiele der Erfindung unter Bezugnahme auf Figuren näher dargestellt, dabei zeigen schematisch und beispielhaft
- Figur 1: ein Funktionsstruktur eines Einblasventils,
- Figur 2a: eine Kennlinie bei stufenloser Querschnittsvariierung,
- Figur 2b: eine Kennlinie bei diskreter Querschnittsvariierung,
- Figur 3a: eine konstruktive Ausgestaltung eines 2-Aktor-Ventils,
- Figur 3b: eine konstruktive Ausgestaltung mit diskreter Querschnittsvariierung
- Figur 3c: eine Ausgestaltung mit Plandrehschieberventil,
- Figur 4a: eine konstruktive Ausgestaltung mit variablem Anschlag, linear verstellend,
- Figur 4b: eine konstruktive Ausgestaltung mit variablem Anschlag, rotatorisch verstellend,
- Figur 4c: eine Ausgestaltung mit axialer Massenstromzufuhr,
- Figur 5a: eine Prinzipdarstellung einer Ausgestaltung mit variablem Anschlag sowie
- Figur 5b: eine Prinzipdarstellung einer Ausgestaltung mit variablem Anschlag.

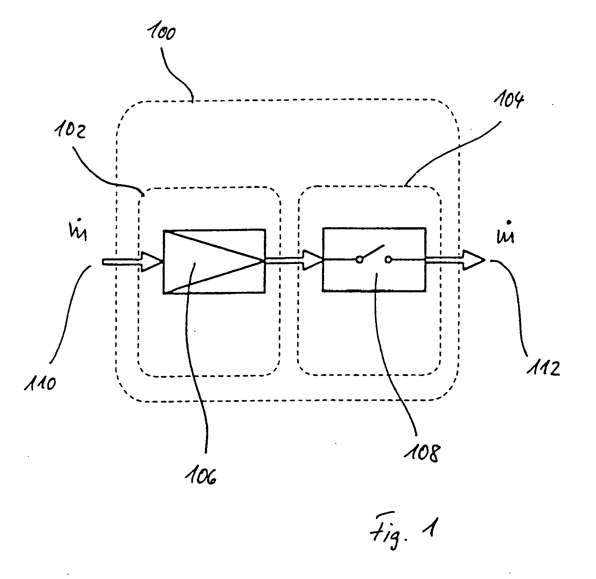

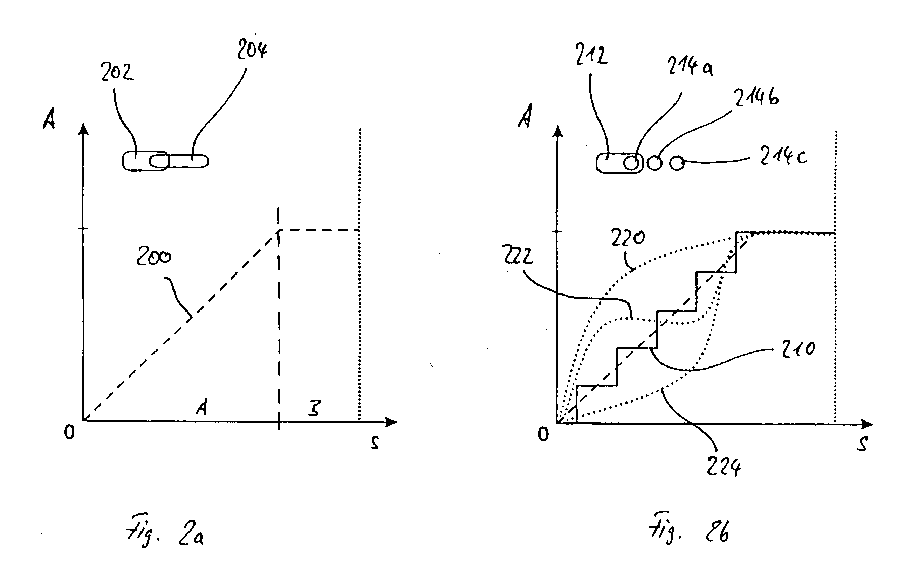

Figur 1 zeigt ein Funktionsstruktur eines Einblasventils 100 zum intermittierenden Einbringen von Kraftstoff, insbesondere von gasförmigem Wasserstoff, zur Verbrennung in einer hier nicht näher gezeigten Brennkraftmaschine; das Ventil 100 ist im Kraftstoffweg angeordnet und weist einen Einlass 110 sowie einen Auslass 112 auf. Unbenommen der vorliegenden Darstellung ist es selbstverständlich ebenso zweckmäßig, wenn die Funktionsbereiche 102 und 104 in umgekehrter Reihenfolge angeordnet sind, so dass der Funktionsbereich 104 im Kraftstofffluss vor dem Funktionsbereich 102 liegt. Die Funktionsbereiche 102 und 104 sind baulich in einem Ventil 100 vereinigt.

Der besondere Vorteil der Trennung in Funktionsbereiche 102 und 104 liegt dabei darin, dass nun jeder Funktionsbereich 102 und 104 eine spezifische Aufgabe erfüllt, wodurch nicht nur eine Konstruktion mit sich entgegenstehenden Anforderungen und daraus resultierend dem Zwang zu Kompromissen vermieden wird, sondern eine optimale, der jeweiligen spezifischen Aufgabe gerechte konstruktive Ausgestaltung eines jeden Funktionsbereiches 102 und 104 ermöglicht wird. Jedem der Funktionsbereiche 102 und 104 ist ein Aktuator zugeordnet, so dass eine unabhängige Ansteuerung ermöglicht ist.

Der Funktionsbereich 102 umfasst eine Einrichtung 106 mittels welcher es möglich ist, eine Kraftstoffmenge veränderlich zuzumessen. Beispielsweise ist die Einrichtung 106 ein Schieber, zweckmäßigerweise mit massenproportionalem Strömungsquerschnitt oder eine Blende, mittels welcher der Strömungsquerschnitt veränderbar ist. Gemäß eines weiteren erfinderischen Gedankens wird die Einrichtung 106 auch unabhängig von einem weiteren Funktionsbereich 104 verwendet.

Der Funktionsbereich 104 umfasst eine Einrichtung 108 mittels welcher der Kraftstoffstrom schaltbar ist. Die Einrichtung 108 ist beispielsweise ein Magnetschließventil, welches eine Kraftstoffzufuhr in definierten Grenzen bezüglich Zeitpunkt, Verlauf, und/oder Dauer ermöglicht.

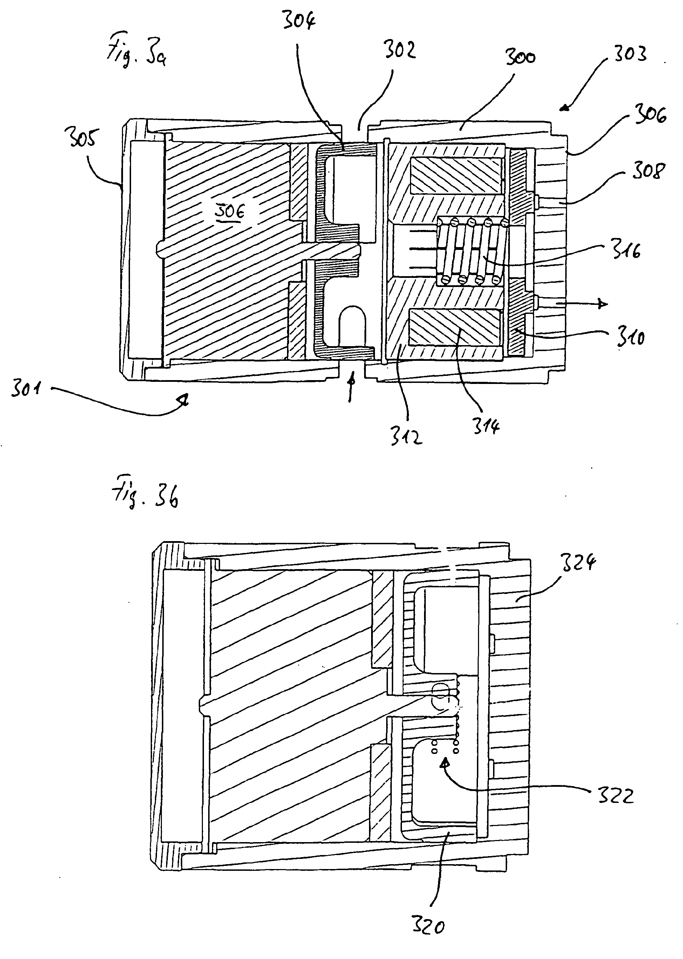

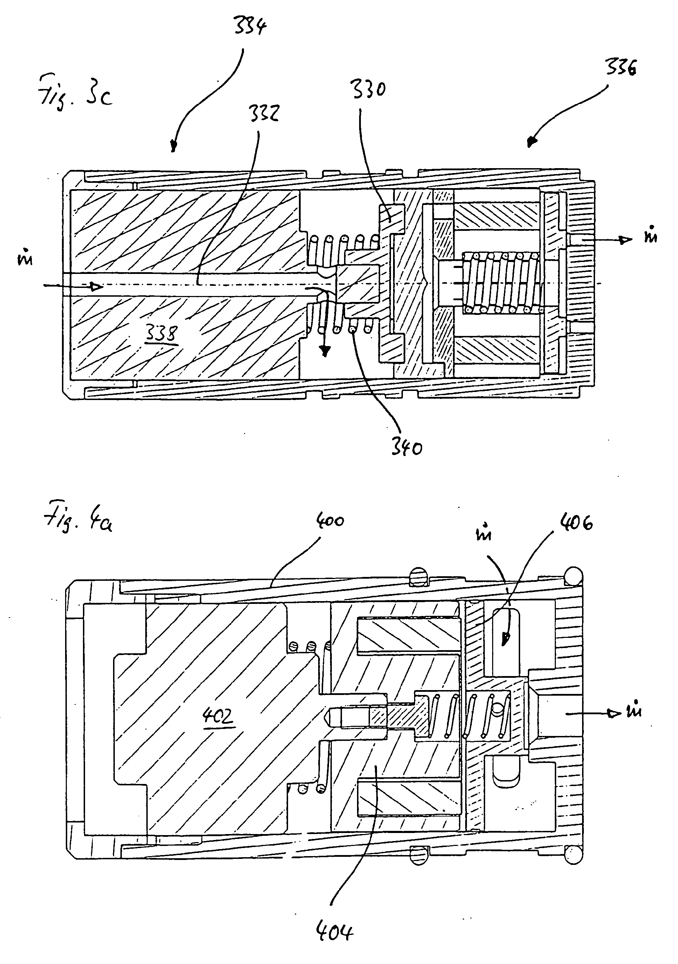

Konstruktive Ausgestaltungen zu dieser Ausführungsform sind im Folgenden den Figuren 3a bis 3c sowie der dazugehörigen Beschreibung zu entnehmen.

Gemäß einer weiteren Ausführungsform handelt es sich bei der Einrichtung 108 um eine Verschlusseinheit, welche zwischen einer Offenstellung und einer Schließstellung bewegbar, die Einrichtung 106 ist derart ausgebildet, dass mittels ihr wenigstens einer der Anschläge, welche die Endlagen für die Bewegung der Verschlusseinheit bilden, verschiebbar ist. Auf diese Weise erfolgt eine Zumessung des Massenstromes mittels beispielsweise aktuatorgesteuerter Verstellung wenigstens eines Anschlages, eine Schaltung erfolgt durch öffnen/schließen mittels der Verschlusseinheit der Einrichtung 108.

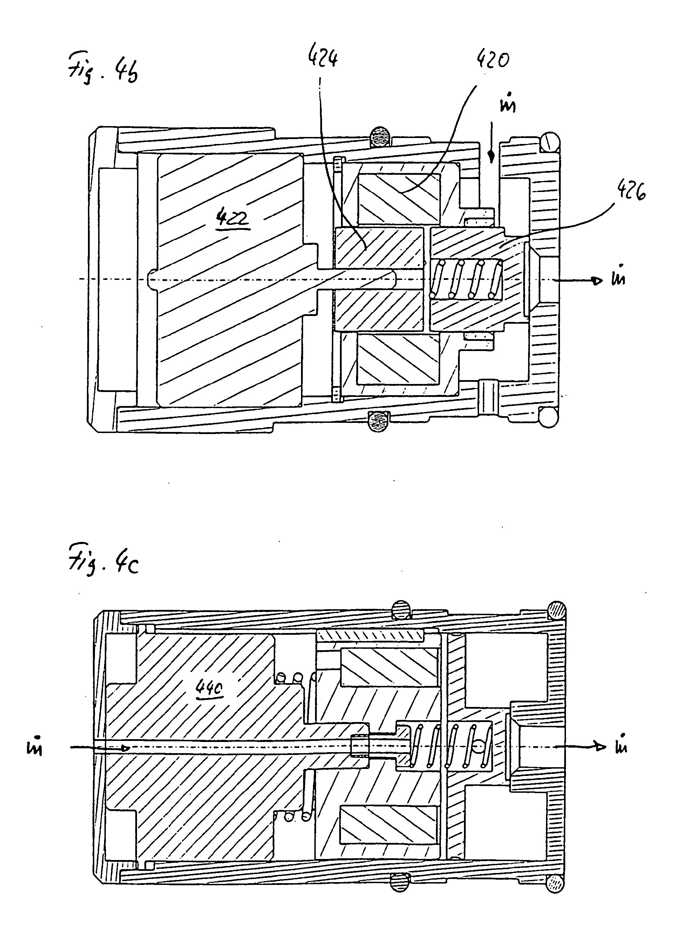

Konstruktive Ausgestaltungen zu dieser Ausführungsform sind nachfolgend den Figuren 4a bis 4c sowie der dazugehörigen Beschreibung zu entnehmen.

Eine Kennlinie 200 bei stufenloser Querschnittsvariierung ist in Figur 2a dargestellt. Dabei ist der Öffnungsquerschnitt A für den Kraftstoffdurchfluss gegen den Stellweg s einer Verstelleinrichtung aufgetragen. Symbolisch ist eine möglich Realisierung in Form zweier sich entsprechend der Stellung beispielsweise eines Schiebers überlappender Öffnungen 202 und 204 gezeigt. In der Figur ist eine in Bereich A linear ansteigende, in B konstant verlaufende Kennlinie gezeigt. Entsprechend der Formgebung der Öffnungen 202, 204 ist jedoch eine nahezu beliebige Kennlinie (Figur 2b 220, 222, 224) möglich, so dass das erfindungsgemäße Ventil an jeden Anwendungsfall anpassbar ist.

Ein Kennlinie 210 bei diskreter Querschnittsvariierung zeigt Figur 2b. Auch hier ist der Öffnungsquerschnitt A für den Kraftstoffdurchfluss gegen den Stellweg s einer Verstelleinrichtung aufgetragen. Symbolisch ist eine mögliche Realisierung dargestellt, wobei eine Öffnung 212 sich bei Verstellung der Zumesseinrichtung mit einer zunehmenden Anzahl von einzelnen weiteren Öffnungen 214a, 214b, 214c überlappt. Gegebenfalls ist zur Erzeugung einer stufigen Kennlinie auch eine Ausgestaltung mit nur zwei zusammenwirkende Öffnungen als zweckmäßig anzusehen, welche eine entsprechende kantige Form aufweisen, so dass die gewünschte Kennlinie bei kontinuierlich sich ändernder Überlappung erzeugt wird.

Auch im Falle einer diskreten Querschnittsvariierung sind - ebenso wie bei einer stufenlosen Querschnittsvariierung - durch eine entsprechende Ausgestaltung der sich Überlappenden Öffnungen 212, 214a, 214b, 214c nahezu beliebig geformte progressive, degressive oder mischgeformte Kennlinien 220, 222, 224 möglich.

Mit Figur 3a ist eine konstruktive Ausgestaltung eines 2-Aktor-Ventils gezeigt. Der erste Funktionsbereich 301 zur variablen Zumessung des Kraftstoffmassenstromes umfasst dabei einen ersten Aktuator 306, welcher rotatorisch eine mit ihm drehfest verbundene Massestromzuteilungseinheit 304 bewegt. Massestromzuteilungseinheit 304 weist eine oder mehrere über den Umfang verteilte Öffnungen auf, welche mit Öffnungen 302 im Gehäuse 300 des Ventils korrespondieren, so dass entsprechend der Pfeilrichtung der Kraftstoff senkrecht zur Ventilachse zufließt. Wie beschrieben erfolgt die Kraftstoffmassestromzuteilung entsprechend der Stellung des ersten Aktuators und somit des Überlappungsgrades der Öffnungen 302 und der Öffnungen der Massestromzuteilungseinheit 304.

Der Kraftstoffzufluss 302 ist in etwa axial mittig angeordnet, von wo ausgehend in Richtung des Ventilendes 305 sich in einer Richtung der den ersten Aktuator 306 umfassende Gehäusebereich erstreckt. In der anderen Richtung schließt sich in Richtung des Ventilendes 306 der zweite Funktionsbereich 303 an, welcher das Öffnen bzw. Schließen des Kraftstoffflusses ermöglicht. Hierzu betätigt ein zweiter Aktuator 312, welcher einen gegen eine Feder 316 wirkenden Elektromagneten 314 umfasst, ein Start-/Stopelement 310 zum Öffnen bzw. Verschließen der Kraftstoffauslassöffnungen 308. In geöffnetem Zustand tritt der Kraftstoff durch die Kraftstoffauslassöffnungen 308 in Pfeilrichtung in Richtung Verbrennungsraum der Brennkraftmaschine aus.

Mittels Steuerung der Massestromzuteilungseinheit 304 des ersten Funktionsbereiches 301 ist eine Einstellung der Durchflussrate in Abhängigkeit einer Vielzahl von Parametern wie Druck, Temperatur, Kraftstoffart, Motorlast und/oder Drehzahl ermöglicht, so dass die Verschlusseinheit 310 in einem dynamischen Bereich arbeiten kann, bei welchem der zeitliche Anteil der Öffnungs- und Schließvorgänge am Zumessvorgang klein ist. Darüber hinaus übernimmt Verschlusseinheit 310 die eigentliche Dichtfunktion im Ventil.

Figur 3b zeigt eine konstruktive Ausgestaltung des ersten Funktionsbereiches 301 des Ventils mit diskreter Querschnittsvariierung. Die Öffnungen der Massestromzuteilungseinheit 320 korrespondieren dabei mit einer Mehrzahl von Öffnungen 322 im Gehäuse 324 des Ventils. Bei der Betätigung der Massestromzuteilungseinheit 320 mittels eines Schrittmotors wird konstruktiv der Einschwingvorgang bzw. die Schritttoleranz in Bereiche gelegt, in denen dabei keine teilweise (schwingende) Überdeckung von Öffnungen erfolgt. Auf diese Weise wird eine sehr exakte Kraftstoffdosierung erreicht und der Regelungsaufwand minimiert.

Eine weitere Ausgestaltung mit Plandrehschieberventil ist in Figur 3c dargestellt. Dabei tritt zudem der Kraftstoff in axialer Richtung entsprechend der Pfeilrichtung in das Ventil ein, wobei im ersten Funktionsbereich 334 der erste Aktuator 338, welcher einen Kanal 332 aufweist, durchströmt wird. Die Massestromzuteilungseinheit 320 wirkt plan - in axialer Richtung; eine Feder 340 sorgt für genügend hohe Anpressung. Im weiteren folgt in Richtung des Kraftstoffflusses, wie bereits mit Figur 3a beschrieben, die Verschlusseinheit des zweiten Funktionsbereiches 336.

Figur 4a zeigt eine konstruktive Ausgestaltung der weitern Ausführungsform mit variablem Anschlag. Im Ventilgehäuse 400 ist ein erster Funktionsbereich zur variablen Kraftstoffmassenstromzuteilung, umfassend einen ersten Aktuator 402 zur Betätigung eines variablen Anschlages angeordnet. Der variable Anschlag ist durch die axial verschiebbare Stellung eines zweiten Aktuator 404 gebildet, welcher zur Betätigung einer Verschlusseinheit 406 ansteuerbar ist, wobei die exponierten Stelllagen einer Offen- bzw. Schließstellung entsprechen. Der Hub zwischen diesen beiden Endlagen - und somit der durchströmte Querschnitt - wird mittels des Aktuators 402 durch die Lage des variablen Anschlages bestimmt. Diese Ausführungsform ermöglicht eine sehr gute Dosierbarkeit bei gleichzeitig großer Spreizung im Massenstromdurchsatz und kurzen Schaltzeiten.

Einen weiter konstruktive Ausgestaltung dieser Ausführungsform mit variablem Anschlag ist mit Figur 4b gezeigt, wobei der ersten Aktuator 422 den variablen Anschlag 424 rotatorisch verstellt. Mittels des zweite Aktuators 420 ist die Verschlusseinheit 426 verstellbar entsprechend dem durch den Anschlag 424 begrenzten Verstellbereich. Im übrigen ist die Funktionsweise analog zu der mit Figur 4a gezeigten Ausgestaltung.

Figur 4c stellt eine Ausgestaltung mit axialer Massenstromzufuhr dar. Der erste Aktuator 440 ist dabei mit einem axialen Durchgang für Kraftstoff versehen. Ebenso, wie bei anderen Figuren ist mit *ṁ* der Kraftstoffmassenstrom auch bezüglich seiner Richtung bezeichnet.

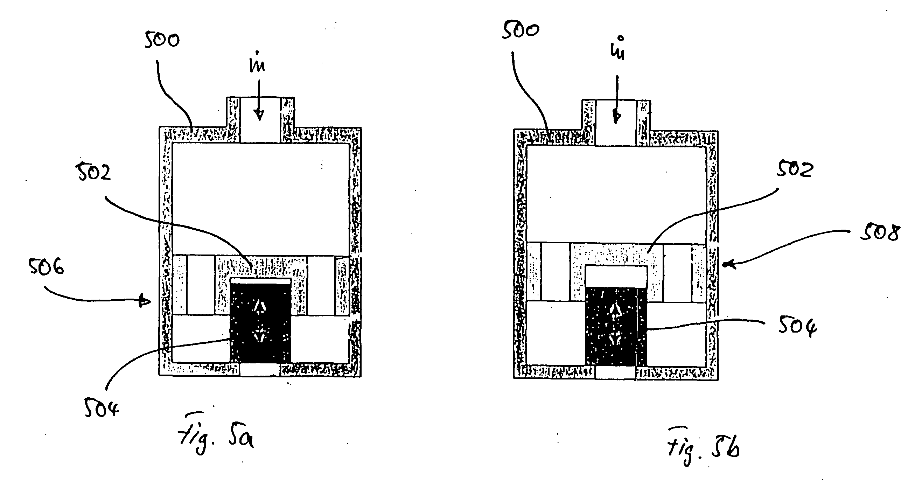

Ein Prinzipdarstellung der weitern Ausführungsform ist mit den Figuren 5a und 5b gezeigt. In einem Ventilgehäuse 500 ist ein variabler Anschlag 502 angeordnet welcher in ersten Endstellung nur einen geringen Hub 506 des Verschlusskörpers 504 zulässt und in einer zweiten Endstellung einen maximalen Hub 508 des Verschlusskörpers 504 gestattet. Gegebenfalls ist der Hub des Verschlusskörpers 504 in der ersten Endstellung 506 zumindest annähernd null.

Das vorliegende Ventil ist insbesondere für den Einsatz in Verbindung mit dem Kraftstoff Wasserstoff (H₂) geeignet. Vorteilhaft ermöglicht das erfindungsgemäße Ventil die Speicherung des Wasserstoffes beispielsweise in flüssigem Zustand tiefkalt bei ca. -250°C in einem Kryotank mit sehr geringem Betriebsdruck, da dem Ventil kein Druckminderer vorgeschaltet werden muss und somit kein hohes Druckgefälle erforderlich ist, wodurch die Zeitspanne bis zum H₂-Verlust aufgrund eines Ausblasens über das Sicherheitsventil bei Erwärmung/ansteigendem Druck im Tank wesentlich verlängert wird.

## Patentansprüche

1. Einrichtung zum intermittierenden Einbringen von Kraftstoff, insbesondere von gasförmigem Wasserstoff, zur Verbrennung in einer Brennkraftmaschine umfassend einen durch einen abhängig vom Stellweg (s) einer Verstelleinrichtung änderbaren, mittels sich überlappender Öffnungen (202, 204, 212, 214a, 214b, 214c) gebildeten, resultierenden Öffnungsquerschnitt (A) gekennzeichneten ersten Funktionsbereich (102) zum Stellen eines Kraftstoffstromes (*m*), **dadurch gekennzeichnet, dass** mit dem ersten Funktionsbereich (102) ein zweiter Funktionsbereich (104) zum Schalten des Kraftstoffstroms (*m*) baulich in einem Gehäuse (300, 400, 500) vereinigt ist.

2. Einrichtung nach Anspruch 1, **dadurch gekennzeichnet, dass** der resultierende Öffnungsquerschnitt (A) stufenlos variierbar ist.

3. Einrichtung nach Anspruch 1 oder 2, **dadurch gekennzeichnet, dass** eine erste Öffnung (202) mit einer zweiten Öffnung (204) zur Bildung des resultierenden Öffnungsquerschnitts (A) korrespondiert.

4. Einrichtung nach einem der vorhergehenden Ansprüche, **dadurch gekennzeichnet, dass** der resultierende Öffnungsquerschnitt (A) diskret variierbar ist.

5. Einrichtung nach einem der vorhergehenden Ansprüche, **dadurch gekennzeichnet, dass** eine erste Öffnung (212) mit mehreren weiteren Öffnungen (214a, 214b, 214c) zur Bildung des resultierenden Öffnungsquerschnitts (A) zusammenwirkt.

6. Einrichtung nach einem der vorhergehenden Ansprüche, **gekennzeichnet durch** eine rotatorisch bewegbare Massestromzuteilungseinheit (304, 320) mit zumindest einer umfangsseitig angeordneten, mit Öffnungen (302, 322) im Gehäuse (300, 324) des Ventils korrespondierenden Öffnung.

7. Einrichtung nach einem der vorhergehenden Ansprüche, **gekennzeichnet durch** eine rotatorisch bewegbare, plan in axialer Richtung wirkende, federkraftbeaufschlagte Massestromzuteilungseinheit (330).

8. Einrichtung zum intermittierenden Einbringen von Kraftstoff, insbesondere von gasförmigem Wasserstoff, zur Verbrennung in einer Brennkraftmaschine umfassend einen ersten Funktionsbereich zum Stellen und einen zweiten Funktionsbereich zum Schalten eines Kraftstoffstromes (*m*) mittels eines Verschlusskörpers, **gekennzeichnet durch** einen abhängig vom Stellweg (s) einer Verstelleinrichtung zwischen einer ersten, einen nur geringen Hub (506) der Verschlusseinrichtung (310, 504) zulassenden Endstellung und einer zweiten, einen maximalen Hub (508) der Verschlusseinrichtung (310, 504) zulassenden Endstellung bewegbaren Anschlag (502), und **dadurch, dass** der erste und der zweite Funktionsbereich baulich in einem Gehäuse vereinigt sind.

9. Einrichtung nach Anspruch 8, wobei der zweite Funktionsbereich eine zwischen zwei Endlagen bewegbare Verschlusseinrichtung (310, 504) umfasst, **dadurch gekennzeichnet, dass** mittels des ersten Funktionsbereiches wenigstens eine Endlage derart verlagerbar ist, dass eine Veränderung des Bewegungsbereiches der Verschlusseinrichtung (310, 504) erfolgt.

10. Einrichtung nach Anspruch 8 oder 9, **dadurch gekennzeichnet, dass** der zweite Funktionsbereich einen zwischen zwei, einer Offen- und einer Schließstellung entsprechenden, Endlagen schaltbaren Aktuator (404) umfasst, wobei zur Bildung des variablen Anschlags der Aktuator (404) selbst axial verschiebbar ist und dessen maximaler Hub durch seine Lage bestimmt ist.

11. Einrichtung nach einem der Ansprüche 8 bis 10, **dadurch gekennzeichnet, dass** der variable Anschlag (424) rotatorisch verstellbar ist.

12. Einrichtung nach einem der vorhergehenden Ansprüche, **dadurch gekennzeichnet, dass** sowohl der erste (102, 301) als auch der zweite Funktionsbereich (104, 303) einen ansteuerbaren Aktuator (306, 312, 402, 404, 420, 422, 440) umfasst.

13. Einrichtung nach einem der vorhergehenden Ansprüche, **dadurch gekennzeichnet, dass** der durchströmte Querschnitt (A) bezüglich einer Stellgröße (s) zumindest bereichsweise eine lineare, progressive und/oder degressive Kennlinie (200, 210, 220, 222, 224) aufweist.

## Claims

1. A device for intermittent introduction of fuel, especially gaseous hydrogen, for combustion in an internal combustion engine, comprising a first functional area (102) **characterised by** an opening cross-section (A) variable in dependence on the distance (s) travelled by an adjusting device and formed and resulting from overlapping openings (202, 204, 212, 214a, 214b, 214c) for adjusting a flow of fuel (m), **characterised in that** the first functional area (102) is structurally combined in a single casing (300, 400, 500) with a second functional area (104) for switching the flow (m) of fuel.

2. A device according to claim 1, **characterised in that** the resulting opening cross-section (A) is steplessly variable.

3. A device according to claim 1 or claim 2, **characterised in that** a first opening (202) corresponds with a second opening (204) for forming the resulting opening cross-section (A).

4. A device according to any of the preceding claims, **characterised in that** the resulting opening cross-section (A) is discontinuously variable.

5. A device according to any of the preceding claims, **characterised in that** a first opening (212) co-operates with a number of additional openings (214a, 214b, 214c) for forming the resulting opening cross-section (A).

6. A device according to any of the preceding claims, **characterised by** a mass flow allocation unit (304, 320) with at least one peripheral opening corresponding with openings (302, 322) in the casing (300, 324) of the valve.

7. A device according to any of the preceding claims, **characterised by** a mass flow allocation unit (330) movable in rotation, operating in a plane in the axial direction and actuated by spring force.

8. A device for intermittent introduction of fuel, especially gaseous hydrogen, for combustion in an internal combustion engine, comprising a first functional area for adjusting and a second functional area for switching a flow (m) of fuel via a closure member, **characterised by** a stop (502) movable, in dependence on the distance (s) travelled by an adjusting device, between a first end position permitting only a short stroke (506) of the closure device (310, 505) and a second end position permitting a maximum stroke (508) of the closure device (310, 504), and also **characterised in that** the first and the second functional area are structurally combined in a casing.

9. A device according to claim 8, wherein the second functional area comprises a closure device (310, 504) movable between two end positions, **characterised in that** by means of the first functional area, at least one end position is movable so as to change the area in which the closure device (310, 504) moves.

10. A device according to claim 8 or claim 9, **characterised in that** the second functional area comprises an actuator (404) switchable between two end positions corresponds to an open and a closing position, wherein in order to form the variable stop the actuator (404) itself is axially movable and its maximum stroke is determined by its position.

11. A device according to any of claims 8 to claim 10, **characterised in that** the variable stop (424) is adjustable in rotation.

12. A device according to any of the preceding claims, **characterised in that** both the first functional area (102, 301) and the second functional area (104, 303) comprise an actuatable actuator (306, 312, 402, 404, 420, 422, 440).

13. A device according to any of the preceding claims, **characterised in that** the flowed-through cross-section (A) has a linear, progressive and/or degressive characteristic (200, 210, 220, 222, 224), at least at places, relative to a manipulated variable (s).

## Revendications

1. Dispositif pour l'introduction intermittente de carburant, en particulier d'hydrogène sous forme gazeuse, dans un moteur à combustion interne, comprenant une première zone fonctionnelle (102), **caractérisée par** une section d'ouverture résultante (A) variable en fonction de la course de réglage (s) d'un dispositif de réglage, formée au moyen d'ouvertures (202, 204, 212, 214a, 214b, 214c) se chevauchant, pour régler un flux de carburant (m),
**caractérisé en ce qu'**
à la première zone fonctionnelle (102) est liée une deuxième zone fonctionnelle (104) pour commuter le flux de carburant (m) de manière constructive dans un boîtier (300, 400, 500).

2. Dispositif selon la revendication 1,
**caractérisé en ce que**
la section d'ouverture résultante (A) est variable de manière progressive.

3. Dispositif selon la revendication 1 ou 2,
**caractérisé en ce qu'**
une première ouverture (202) correspond avec une deuxième ouverture (204) pour former la section d'ouverture résultante (A).

4. Dispositif selon une des revendications précédentes,
**caractérisé en ce que**
la section d'ouverture résultante (A) est variable de manière discrète.

5. Dispositif selon une des revendications précédentes,
**caractérisé en ce qu'**
une première ouverture (212) collabore avec plusieurs autres ouvertures (214a, 214b, 214c) pour former la section d'ouverture résultante (A).

6. Dispositif selon une des revendications précédentes,
**caractérisé par**
une unité de distribution de flux massique (304, 320) mobile en rotation avec au moins une ouverture disposée sur la périphérie, correspondant avec des ouvertures (302, 322) dans le boîtier (300, 324) de la soupape.

7. Dispositif selon une des revendications précédentes,
**caractérisé par**
une unité de distribution de flux massique actionnée par ressort (330), mobile en rotation, agissant à plat dans la direction axiale.

8. Dispositif pour l'introduction intermittente de carburant, en particulier d'hydrogène sous forme gazeuse, dans un moteur à combustion interne, comprenant une première zone fonctionnelle pour régler et une deuxième zone fonctionnelle pour commuter un flux de carburant (m) au moyen d'un élément obturateur,
**caractérisé par**
une butée (502) mobile en fonction de la course de réglage (s) d'un dispositif de réglage entre une première position terminale n'autorisant qu'une faible course (506) du dispositif de fermeture (310, 504) et une deuxième position terminale autorisant une course maximale (508) du dispositif de fermeture (310, 504), et les première et deuxième zones fonctionnelles réunies de manière constructive dans un boîtier.

9. Dispositif selon la revendication 8, dans lequel la deuxième plage fonctionnelle comprend un dispositif de fermeture (310, 504) mobile entre deux positions terminales,
**caractérisé en ce qu'**
au moyen de la première zone fonctionnelle, au moins une butée terminale est mobile pour produire une modification de la plage de déplacement du dispositif de fermeture (310, 504).

10. Dispositif selon la revendication 8 ou 9,
**caractérisé en ce que**
la deuxième zone fonctionnelle comprend un actionneur (404) commutable entre deux positions terminales correspondant à une position ouverte et à une position fermée, l'actionneur (404) lui-même pouvant être décalé axialement pour former la butée axiale et sa course maximale étant déterminée par sa position.

11. Dispositif selon une des revendications 8 à 10,
**caractérisé en ce que**
la butée variable (424) est réglable en rotation.

12. Dispositif selon une des revendications précédentes,
**caractérisé en ce qu'**
aussi bien la première (102, 301) que la deuxième zone fonctionnelle (104, 303) comprennent un actionneur contrôlable (306, 312, 402, 404, 420, 422, 440).

13. Dispositif selon une des revendications précédentes,
**caractérisé en ce que**
la section (A) traversée par le flux présente pour une variable réglante (s) une courbe caractéristique linéaire, progressive et/ou dégressive (200, 210, 220, 222, 224) au moins à l'échelle de la zone.
